# EUROPÄISCHE PATENTANMELDUNG

(11) **EP 0 534 374 A1**
(43) Veröffentlichungstag der Anmeldung: **31.03.1993**
(21) Anmeldenummer: 92116215.2
(22) Anmeldetag: 23.09.1992
(51) Int. Cl.: B60P 7/08, B62D 33/04

(54) **Schwenkbarer Regalboden im Fahrzeug**

(30) Priorität: 27.09.1991 DE 9112083 U
(71) Anmelder: SPIER GmbH, D-32839 Steinheim (DE)
(72) Erfinder: Hagedorn, Herbert, W-4934 Horn-Bad Meinberg (DE)
(74) Vertreter: Hanewinkel, Lorenz, Dipl.-Phys.

(57) **Zusammenfassung**

Der Regalboden, insbesondere in einem Gepäcktransportfahrzeug, ist wandseitig in einer horizontalen Lastaufnahmestellung längs angeordnet von vertikalen Trägern (10, 11, 12) und mindestens einem wandseitig gehalterten Stützarm (2) gehalten und in eine weitere platzsparende Stellung verbringbar.

Der Regalboden (1) ist dabei an den vertikalen Trägern (10, 11, 12) wandseitig um eine horizontale Achse schwenkbar befestigt und der Stützarm (2) um eine vertikale Schwenkachse (20) schwenkbar wandseitig gehalten.

## Beschreibung

Die Erfindung betrifft einen Regalboden, insbesondere in einem Gepäcktransportfahrzeug, der wandseitig in einer horizontalen Lastaufnahmestellung längs angeordnet von vertikalen Trägern und mindestens einem wandseitig gehalterten Stützarm gehalten ist, und in eine weitere platzsparende Stellung verbringbar ist.

Es ist bekannt, in Fahrzeugen, insbesondere für den Pakettransport, herausnehmbare Regalböden in Traggestellen anzuordnen, so daß entweder mehrere kleine Pakete auf dem Boden und in einem oder mehreren übereinander angeordneten Regalfächern eingelagert werden können oder bei herausgenommenen Regalböden große Pakete unten eingestellt werden können. Das Ein- und Aushängen der Regalböden ist zeitaufwendig, und die ausgehängten Regalböden sind ungünstig zu lagern oder aufzustellen und fallen während der Fahrt leicht um.

Es ist Aufgabe der Erfindung, einen Regalboden und dessen Halterungin einem Fahrzeuge zu offenbaren, der mühelos zwischen einer Gebrauchsstellung und einer platzsparenden Nichtgebrauchsstellung verbringbar ist und hohe Sicherheit und Tragfähigkeit bei geringem Gewicht hat.

Die Lösung der Aufgabe ist dadurch gegeben, daß der Regalboden an den vertikalen Trägern wandseitig um eine horizontale Achse schwenkbar befestigt ist und der Stützarm um eine vertikale Schwenkachse schwenkbar wandseitig gehalten ist.

Vorteilhafte Ausgestaltungen sind in den Unteransprüchen angegeben.

Der Regalboden ist an seiner Längsseite wandseitig mit Klappscharnieren schwenkbar befestigt und herabgeschwenkt stirnseitig von Auflagen getragen, in denen es verrastet form- und kraftschlüssig gehalten ist, so daß, es beim Fahren durch Erschütterungen nicht klappert oder verrutscht. Senkrecht geschwenkt ist der Regalboden ebenfalls kraft- und formschlüssig in einer Rastvorrichtung an der Montagewand gehalten. Bei einer Regallänge von über einem Meter, z.B. von 2 m, ist mindestens ein schwenkbarer Stützarm unter dem Regalboden wandseitig befestigt, der zur Unterstützung herausgeschwenkt quer zum gesamten Regal geklemmt gehalten und gesichert ist. Bei hochgeschwenktem Regalboden ist auch der Stützarm an die Montagewand geschwenkt und dort schwergängig geklemmt oder gerastet gehalten so daß ein völlig freier Laderaum ohne Hindernisse entsteht.

Die Traglast des Regalbodens und des Stützarmes sind bei leichter Bauweise sehr hoch, da diese aus endseitig mehrfach eingebogenem Blech gefertigt sind. Darüberhinaus sind die mit Radien von über 5 mm eingebogenen Versteifungsränder gut handhabbar, und sie verhindern Verletzungen der Packer beim Anfassen und Anstoßen. Weiterhin bietet der nach oben gebogene Rand des Regalbodens eine Schutzborde gegen ein Abgleiten einer darauf befindlichen Ladung.

Die Stützkraft des Stützarmes wird durch einen vertikalen, etwa Z-förmigen Doppelwinkelträger aufgenommen und in das Chassis abgeleitet. Dieser Träger gibt auch dem Fahrzeug eine zusätzliche Flankenverstärkung.

Es ist vorteilhaft vorgesehen, mindestens einen Regalboden von der Fahrzeugrückwand, wo die Verrastung und das eine Auflager angeordnet sind, zu einer Fahrerkabinenrückwand zu erstrecken, wo das andere Auflager und die Verrastung angeordnet sind, zu erstrecken, so daß dadurch eine Längsverstrebung des Laderaumes gegeben ist, und eine gute Lastverteilung erbracht wird. Besondere Regalstützleitern sind entbehrlich. Vorzugsweise sind beidseitig im Laderaum je zwei Regalböden vorgesehen, zwischen denen sich ein Ladegang mit zentralen Zugängen vom Fahrerhaus und von der Heckseite ertreckt. Bei hochgeschwenkten Regalböden ist die gesamte Ladefläche frei verwendbar.

Vorteilhafte Ausgestaltungen sind in den Figuren 1 bis 6 dargestellt.
- Fig. 1: zeigt eine Aufsicht in einen Fahrzeuginnenraum mit Regalböden;
- Fig. 2: zeigt einen wandseitigen Ausschnitt eines Regalbodens mit einem Stützarm in Fahrzeuglängsrichtung;
- Fig. 3: zeigt einen frontseitigen Ausschnitt eines Regalbodens mit einem Stützarm in Fahrzeuglängsrichtung;
- Fig. 4: zeigt eine Aufsicht zu Fig. 2;
- Fig. 5: zeigt einen Querschnitt des Stützarmes;
- Fig. 6: zeigt ein unteres Schwenk- und Stützlager des Stützarmes.

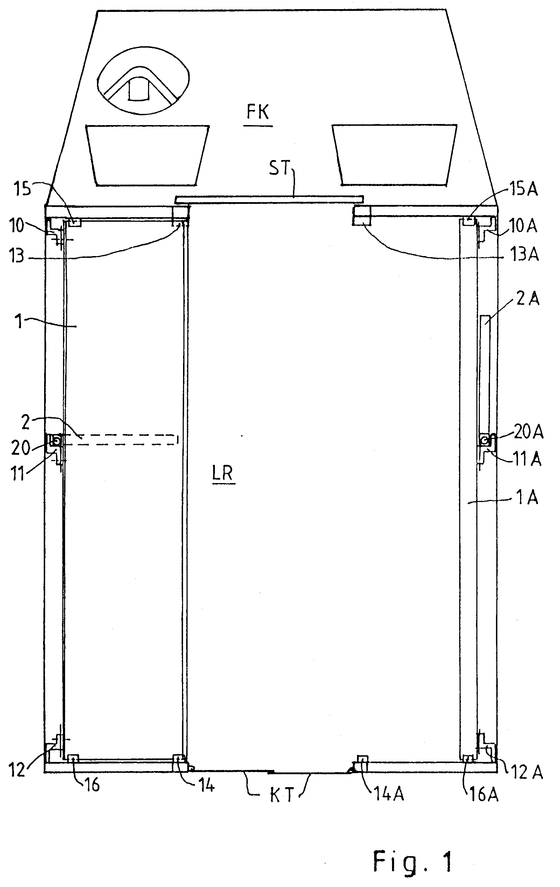

In Fig. 1 ist ein Gepäcktransportfahrzeug bei abgehobenem Dach von oben dargestellt. An die Fahrerkabine (FK) schließt sich der Laderaum (LR) an, der durch heckseitige Klapptüren (KT) und eine frontseitige Schiebetür (ST) zugänglich ist. Beidseitig des Mittelganges im Laderaum (LR) sind Regalböden (1, 1A) zur Aufnahme von Paketen längs durchgehend angeordnet. Diese sind wandseitig an vertikalen Winkelträgern (10, 11, 12; 10A, 11A, 12A) schwenkbar befestigt. In Fahrtrichtung gesehen links sind zwei Regalböden (1), die sich übereinander befinden, in ihrer horizontalen Lastaufnahmestellung herabgeschwenkt, wobei diese jeweils endseitig in Rastlagern (13, 14) an vertikalen Wandstreben gehalten sind und mittig eine Unterstützung durch einen untenseitigen Stützarm (2) erhalten. Auf der rechten Seite sind die Regalböden (1A) vertikal hochgeschwenkt, wobei sie endseitig in wandseitigen Rastlagern (15A, 16A) gehalten sind. Die Stützarme (2A) sind wandseitig um eine vertikale Schwenkachse (20A) eingeschwenkt gehalten, so daß dort eine völlig freie Ladefläche für hohes Ladegut gegeben ist und auch niedriges Ladegut leicht zugänglich ist. Um eines oder beide Regalböden (1A) in die Arbeitsstellung zu verbringen ist dieser jeweils nur gegen die Rastkraft der Rasthalterungen (15. 16) vorzuziehen und abzuschwenken und außerdem der Stützarm (2A) vorzuschwenken und mit dem Regalboden (1A) in eine Klemmverbindung zu verbringen. Diese beiden Vorgänge lassen sich beidhändig zu gleicher Zeit vornehmen. Sowohl die Regalböden (1, 1A) als auch die Stützarme (2, 2A) haben griffgünstige abgerundete Randbereiche, die die Handhabung angenehm erleichtern. Entsprechend den Rastlagern (13, 14; 15A, 16A) der einen Seite sind jeweils an der anderen Laderaumseite Rastlager (13A, 14A; 15, 16) für beide Positionen der Regalböden vorhanden. Die Höhe der Regalböden und deren Anzahl ist zweckmäßig dem Ladegut anzupassen. Die Rastlager und die Schwenklager lassen sich in den gewünschten Höhen die für eine durchschnittliche Beladung geeignet sind, jeweils anschrauben.

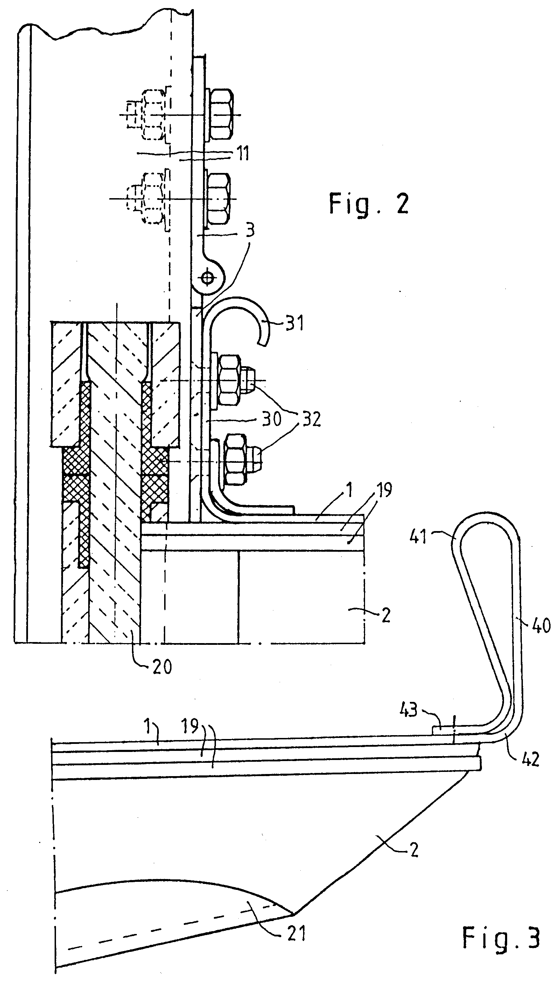

Fig. 2 zeigt einen wandseitigen Ausschnitt des Regallagerbodens (1) mit einem Scharnier (3), das an dem vertikalen Winkelträger (11) befestigt ist. Der Regalboden (1) ist aus Stahlblech hergestellt und mit einem Radius von ca. 6 mm zu einer etwa 50 mm hohen Borde (30) hochgebogen, die endseitig um mehr als 180° nach innen eingerollt ist. Dadurch erhält der Regalboden (1) eine hohe Steifigkeit und eine Befestigungsfläche für das Scharnier (3). Der mit einem Radius von etwa 6 mm eingerollte Rand (31) bietet dem Ladegut eine durchgehende schonende rückwärtige Anlage, die auch die Befestigungsschrauben (32), die übereinander in die Borde (30) eingesetzt sind, zum Laderaum hin überragt.

An dem Winkelträger (11) ist die vertikale Schwenkachse (20) des Stützarmes (2), die geschnitten dargestellt ist, befestigt. Sie ist in Buchsen (21) schwergängig gelagert, so daß der Stützarm (2) in der zurückgeschwenkten Lage beim Fahren oder Bremsen nicht in den Laderaum einschwenkt. Unter dem Regalboden (1) ist ein leistenartiges Klemmblech (19) angenietet, in dem der Stützarm (2) mit einer oberen Abkantung über seine gesamte Länge gehalten ist.

Fig. 3 zeigt das laderaumseitige Ende des Regalbodens (1), an dem ebenfalls eine Borde (40) von etwa 50 mm Höhe mit einem Radius von ca. 6 mm nach oben angebogen ist, Obenendig weist die Borde (40) einen Innenbogen (41) mit etwa 6 mm Biegeradius von mehr als 180° auf. An den Innenbogen (41) anschließend ist das Blech bis zum Regalboden durch den unteren Bogen (42) verlaufend zurückgeführt und auf dem unteren Boden mit einem horizontalen Endbereich abgestützt, der vorzugsweise dort befestigt ist. Dieser Doppelumschlag des Regalbodens im Bordbereich gibt eine außerordentlich hohe Steifigkeit des Regalbodens (1) bei geringem Gewicht.

Das Klemmblech (19) und der Stützarm (2) sind annähernd bis zum beschickungsseitigen Bord (40) geführt und reichen bis unter den Endbereich (43) desselben, so daß sie die Last aus dem versteifenden Bord (40) voll aufnehmen und schräg nach unten abführen. Der etwa trapezförmigr Stützarm (2) besteht aus einem vertikalen Blech, das zu seinem Schwenklager hin verbreitert ist, und an seinem unteren Bereich nach oben eine versteifende Aufbiegung (21) aufweist.

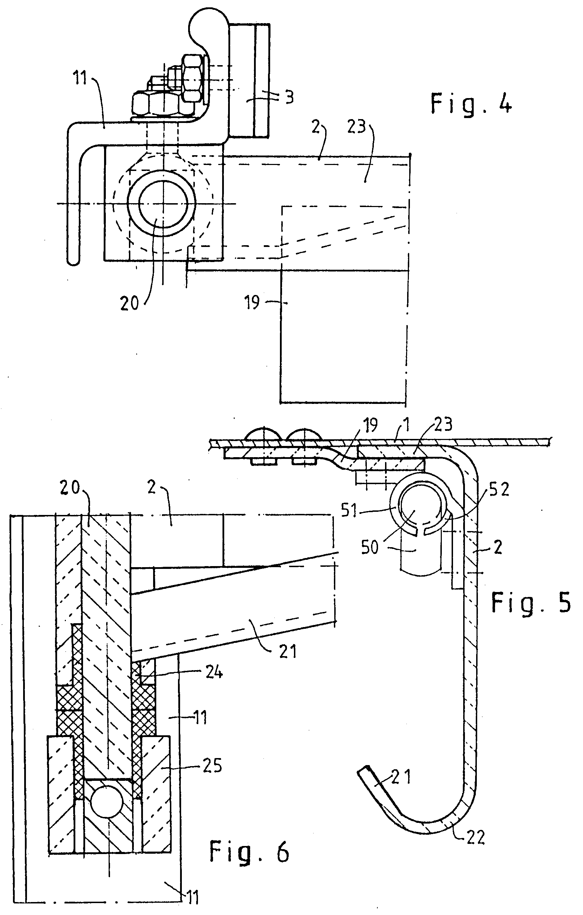

Fig. 4 zeigt eine Aufsicht auf das Schwenklager (20) mit seiner Halterung an der als Doppelwinkelträger (11) ausgebildeten vertikalen Stütze. An einem Schenkel desselben ist das Scharnier (3) befestigt. Der Regalboden ist in der Figur weggelassen, wodurch die Sicht auf das Klemmblech (19) frei ist, unter das der Stützarm (2) mit einer oberen horizontalen Abkantung (23) eingeklemmt ist.

Fig. 5 zeigt einen reinen Querschnitt des Stützarmes (2) etwa in dessen Mitte, wobei er mit der Abkantung (23) zwischen das Klemmblech (19) und den Regalboden (1) eingeklemmt ist. Zur Sicherung der Klemmung ist ein Federstecker (50) vorgesehen, der eine Öse (51) und einen Haken (52) der beiden Klemmteile (19, 23) miteinander verbindet. Im unteren Bereich des Stützarmes (2) ist die Aufbiegung (21) mit einem großen handlichen Radius dargestellt.

Fig. 6 zeigt die untere Befestigung (25) des Schwenklagers (20) an dem Doppelwinkelträger (11), durch das die Stützlast des Stützarmes (2) aufgenommen wird. Die Aufbiegung (21) des Stützarmes (2) ist bis an das Lager herangeführt und auf einer Lagerbuchse (24) aufgesetzt.

## Patentansprüche

1. Regalboden, insbesondere in einem Gepäcktransportfahrzeug, der wandseitig in einer horizontalen Lastaufnahmestellung längs angeordnet von vertikalen Trägern (10, 11, 12) und mindestens einem wandseitig gehalterten Stützarm (2) gehalten ist, und in eine weitere platzsparende Stellung verbringbar ist, dadurch gekennzeichnet, daß der Regalboden (1) an den vertikalen Trägern (10, 11, 12) wandseitig um eine horizontale Achse schwenkbar befestigt ist und der Stützarm (2) um eine vertikale Schwenkachse (20) schwenkbar wandseitig gehalten ist.

2. Regalboden nach Anspruch 1, dadurch gekennzeichnet, daß mindestens einer der Träger (11) ein Winkelträger ist, an dessen einem Schenkel der Regalboden (1) mit einem Scharnier (3) befestigt ist und an dessen anderen Schenkel die Schwenkachse (20) gehaltert ist.

3. Regalboden nach Anspruch 2, dadurch gekennzeichnet, daß der Träger (11) ein Doppelwinkelträger ist, der einen dritten Schenkel aufweist, mit dem er wandseitig befestigt ist.

4. Regalboden nach einem der vorstehenden Ansprüche, dadurch gekenzeichnet, daß der Regalboden (1) jeweils an seinen beiden Längsenden wandab jeweils in der Lastaufnahmestellung auf einem Rastlager (13, 14) abgestützt gehalten ist und in der weiteren Stellung vertikal geschwenkt in einem Rastlager (15, 16) gehalten ist.

5. Regalboden nach einem der vorstehenden Ansprüche, dadurch gekennzeichnet, daß der Regalboden (1) aus Stahlblech besteht und wandseitig eine hochgebogene Borde (30) aufweist, die obenseitig einen eingerollten Rand (31) aufweist.

6. Regalboden nach Anspruch 5, dadurch gekennzeichnet, daß die wandseitige Borde (30) mit einem Biegeradius von ca. 6 mm gebogen und der Rand (31) mit einem Radius von ca. 6 mm um mehr als 180° gerollt ist und die Borde (30) etwa 50 mm hoch ist und an ihr das Schranier (3) befestigt ist.

7. Regalboden nach einem der vorstehenden Ansprüche, dadurch gekennzeichnet, daß der Regalboden (1) wandabgelegen eine um einen unteren Bogen (42) hochgebogene Borde (30) aufweist, die obenseitig einen Innenbogen (41) aufweist.

8. Regalboden nach Anspruch 7, dadurch gekennzeichnet, daß das Stahlblech von dem Innenbogen (41) bis in den unteren Bogen (42) und durch diesen verlaufend geführt und in einem horizontalen Endbereich (43) auslaufend gebogen ist.

9. Regalboden nach Anspruch 8, dadurch gekennzeichnet, daß der untere Boden (42) und der Innenbogen (41) einen Biegeradius von ca. 6 mm aufweisen.

10. Regalboden nach Anspruch 9, dadurch gekennzeichnet, daß der Endbereich (43) auf dem horizontalen Regalbodenbereich befestigt ist.

11. Regalboden nach einem der vorstehenden Ansprüche, dadurch gekennzeichnet, daß der Stüztarm (2) in seiner Lastaufnahmestellung mit einer oberen horizontalen Abkantung (23) zwischen dem Regalboden (1) und einem Klemmblech (19) geklemmt gehalten ist, das quer zu dem Regalboden (1) verlaufend unter diesem befestigt ist.

12. Regalboden nach Anspruch 11, dadurch gekennzeichnet, daß das Klemmblech (19) und der Stützarm (2) wandab Ösen (51) und/oder Haken (52) aufweisen, die mit einem Federstecker (50) lösbar verbunden sind.

13. Regalboden nach einem der vorstehenden Ansprüche, dadurch gekennzeichnet, daß der Stützarm (2) untenseitig eine griffige Aufbiegung (21) um 120 - 150° aufweist, deren Biegeradius 8 - 12 mm beträgt.

14. Regalboden nach Anspruch 13, dadurch gekennzeichnet, daß der Stützarm (2) mit seiner Aufbiegung (21) bis auf eine Lagerbuchse (24) der Schwenkachse (20) geführt und dort abgestützt ist und die Lagerbuchse (24) auf einer Befestigungsmuffe (25) der Schwenkachse (20) an dem Träger (11) abgestützt drehbar gelagert ist.

15. Transportfahrzeug mit einem Laderaum (LR), der längswandseitig vertikale Träger (10, 11, 12; 10A, 11A, 12A) aufweist und rückseitig sowie zu einer Fahrerkabine (FK) feststehende Wandbereiche aufweist und zwischen diesen feststehenden Wandbereichen mindestens ein in eine Lastaufnahmestellung und eine platzsparende Stellung verbringbarer Regalboden (1, 1A) angeordnet ist, dadurch gekennzeichnet, daß jeweils der Regalboden (1, 1A) an den wandseitig benachbarten Trägern (10, 11, 12; 10A, 11A, 12A) angelenkt ist und in der Lastaufnahmestellung auf Rastlagern (13, 14, 13A, 14A) an den feststehenden Wandbereichen gerastet gehalten und abgestützt ist und in der anderen Stellung vertikal geklappt in weiteren Rastlagern (15, 16; 15A, 16A) gehalten ist.

16. Transportfahrzeug nach Anspruch 15, dadurch gekennzeichnet, daß jeweils an einer mittleren der Stützen (11; 11A) ein schwenkbarer Stützarm (2, 2A) unterhalb des Regalbodens (1; 1A) angelenkt ist.
